# EUROPEAN PATENT APPLICATION

(11) **EP 4 832 528 A1**
(43) Date of publication of application: **28.10.2026**
(21) Application number: 24906328.0
(22) Date of filing: 17.12.2024
(51) Int. Cl.: H04W 8/24, H04L 41/16

(54) **TRANSMISSION METHOD AND APPARATUS, AND TERMINAL AND NETWORK-SIDE DEVICE**

(30) Priority: 21.12.2023 CN 202311773196
(71) Applicant: Vivo Mobile Communication Co., Ltd., Dongguan, Guangdong 523863 (CN)
(72) Inventor: SUN, Bule, Dongguan, Guangdong 523863 (CN); LI, Jialin, Dongguan, Guangdong 523863 (CN)
(74) Representative: Walaski, Jan Filip
(86) International application number: PCT/CN2024/139813
(87) International publication number: WO 2025/130847

(57) **Abstract**

The present application belongs to the technical field of communications. Disclosed are a transmission method and apparatus, and a terminal and a network-side device. The transmission method in the embodiments of the present application comprises: a terminal sending first information to a network-side device, wherein the first information is used for indicating an adjustment suggestion of the terminal regarding a first artificial intelligence (AI) unit.

## Description

### CROSS-REFERENCE TO RELATED APPLICATIONS

This application claims priority to Chinese Patent Application No. 202311773196.3, entitled "TRANSMISSION METHOD AND APPARATUS, TERMINAL, AND NETWORK-SIDE DEVICE" filed with the China National Intellectual Property Administration on December 21, 2023, which is incorporated herein by reference in its entirety.

### TECHNICAL FIELD

This application pertains to the field of communication technologies, and in particular, to a transmission method and apparatus, a terminal, and a network-side device.

### BACKGROUND

With the development of artificial intelligence (Artificial Intelligence, AI) technologies, AI models (also referred to as AI units) have also been applied to communication systems. Currently, in a communication system, model monitoring of an AI model usually relies primarily on monitoring metrics or monitoring data reported by a terminal. A network side adjusts the AI model based on monitoring metrics or monitoring data reported by multiple terminals. However, an AI model adjusted by the network side in such a manner is not applicable to all terminals, resulting in poor applicability of an AI model adjustment manner.

### SUMMARY

Embodiments of this application provide a transmission method and apparatus, a terminal, and a network-side device, to resolve a problem of poor applicability of an AI model adjustment manner in a related technology.

According to a first aspect, a transmission method is provided. The method is performed by a terminal and includes:
sending, by a terminal, first information to a network-side device, where the first information indicates an adjustment recommendation of the terminal for a first artificial intelligence AI unit.

According to a second aspect, a transmission method is provided. The method is performed by a network-side device and includes:
receiving, by a network-side device, first information sent by a terminal, where the first information indicates an adjustment recommendation of the terminal for a first AI unit.

According to a third aspect, a transmission apparatus is provided. The apparatus includes:
a first sending module, configured to send first information to a network-side device, where the first information indicates an adjustment recommendation of the apparatus for a first AI unit.

According to a fourth aspect, a transmission apparatus is provided. The apparatus includes:
a second receiving module, configured to receive first information sent by a terminal, where the first information indicates an adjustment recommendation of the terminal for a first AI unit.

According to a fifth aspect, a terminal is provided. The terminal includes a processor and a memory, and the memory stores a program or instructions that can be run on the processor. When the program or the instructions are executed by the processor, the steps of the method according to the first aspect are implemented.

According to a sixth aspect, a terminal is provided, including a processor and a communication interface. The communication interface is configured to send first information to a network-side device, where the first information indicates an adjustment recommendation of the terminal for a first AI unit.

According to a seventh aspect, a network-side device is provided. The network-side device includes a processor and a memory, and the memory stores a program or instructions that can be run on the processor. When the program or the instructions are executed by the processor, the steps of the method according to the second aspect are implemented.

According to an eighth aspect, a network-side device is provided, including a processor and a communication interface. The communication interface is configured to receive first indication information sent by a terminal, where the first indication information indicates an adjustment recommendation of the terminal for a first AI unit.

According to a ninth aspect, a readable storage medium is provided. The readable storage medium stores a program or instructions. When the program or the instructions are executed by a processor, the steps of the method according to the first aspect are implemented, or steps of the method according to the second aspect are implemented.

According to a tenth aspect, a wireless communication system is provided, including a terminal and a network-side device. The terminal may be configured to perform the steps of the method according to the first aspect, and the network-side device may be configured to perform the steps of the method according to the second aspect.

According to an eleventh aspect, a chip is provided. The chip includes a processor and a communication interface, the communication interface is coupled to the processor, and the processor is configured to run a program or instructions to implement the method according to the first aspect or the method according to the second aspect.

According to a twelfth aspect, a computer program/program product is provided. The computer program/program product is stored in a storage medium, and the computer program/program product is executed by at least one processor to implement the steps of the method according to the first aspect or the second aspect.

In embodiments of this application, the terminal sends the first information to the network-side device, where the first information indicates an adjustment recommendation of the terminal for the first AI unit. In this way, adjustment of the first AI unit is made by the network-side device based on the adjustment recommendation reported by the terminal, and the adjustment of the first AI unit is more aligned with the running scenario of the terminal, effectively improving applicability of AI unit adjustment.

### BRIEF DESCRIPTION OF THE DRAWINGS

FIG. 1 is a block diagram of a wireless communication system to which an embodiment of this application is applicable;
FIG. 2 is a flowchart of a transmission method according to an embodiment of this application;
FIG. 3 is a flowchart of another transmission method according to an embodiment of this application;
FIG. 4 is a flowchart of another transmission method according to an embodiment of this application;
FIG. 5 is a structural diagram of a transmission apparatus according to an embodiment of this application;
FIG. 6 is a structural diagram of another transmission apparatus according to an embodiment of this application;
FIG. 7 is a structural diagram of a communication device according to an embodiment of this application;
FIG. 8 is a structural diagram of a terminal according to an embodiment of this application; and
FIG. 9 is a structural diagram of a network-side device according to an embodiment of this application.

### DETAILED DESCRIPTION

Technical solutions in embodiments of this application are clearly described in the following with reference to the accompanying drawings in embodiments of this application. Apparently, the described embodiments are some rather than all of the embodiments of this application. All other embodiments obtained by persons of ordinary skill in the art based on embodiments of this application shall fall within the protection scope of this application.

The terms "first", "second", and the like in this application are used to distinguish similar objects, but are not used to describe a specific sequence or order. It should be understood that the terms used in such a way are interchangeable in appropriate circumstances so that embodiments of this application can be implemented in other orders than the order illustrated or described herein. Moreover, the objects distinguished by "first" and "second" are usually of one type, and a quantity of objects is not limited. For example, there may be one or more first objects. In addition, the term "or" in this application denotes at least one of the connected objects. For example, "A or B" covers three schemes, that is, scheme 1: A is included and B is not included; scheme 2: B is included and A is not included; and scheme 3: both A and B are included. The character "/" generally indicates an "or" relationship between the associated objects.

In this application, the term "indication" may be a direct indication (or referred to as an explicit indication) or an indirect indication (or referred to as an implicit indication). The direct indication may be understood as that a sending party explicitly informs, in sent indication, a receiving party of content such as specific information, an operation that needs to be performed, or a request result. The indirect indication may be understood as that a receiving party determines corresponding information based on an indication sent by a sending party, or performs determining and determines an operation that needs to be performed or a request result based on a determining result.

It should be noted that the technologies described in embodiments of this application are not limited to a long term evolution (Long Term Evolution, LTE)/LTE-advanced (LTE-Advanced, LTE-A) system, and may also be used in another wireless communication system, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency-Division Multiple Access, SC-FDMA), or another system. The terms "system" and "network" in embodiments of this application are often used interchangeably, and the described technology can be applied to the systems and radio technologies mentioned above, and can be also applied to other systems and radio technologies. The following descriptions describe a new radio (New Radio, NR) system for exemplary purposes and use the term NR for much of the following descriptions, however, these technologies may also be used in systems other than the NR system, such as a 6th generation (6th Generation, 6G) communication system.

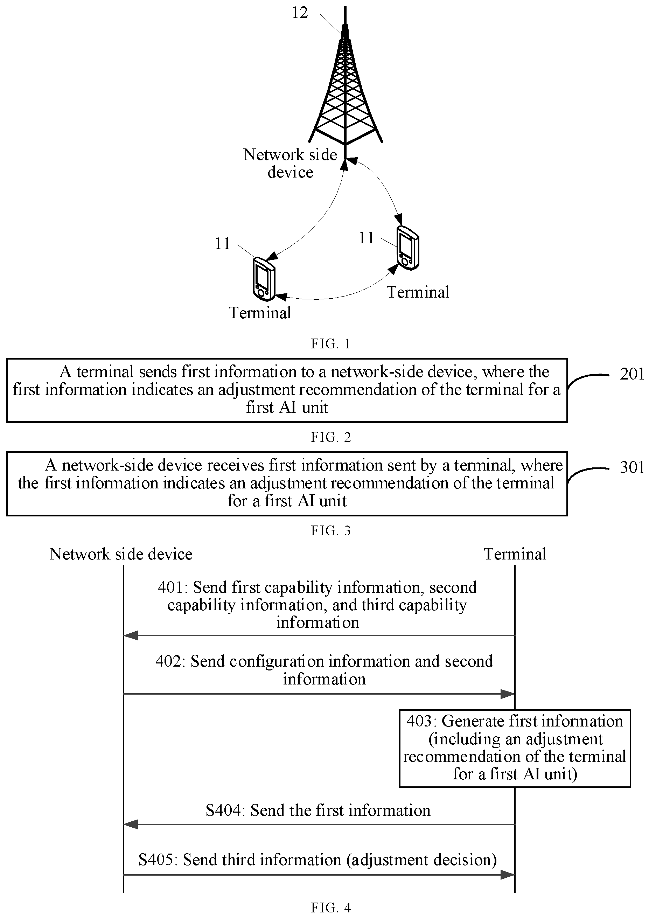

FIG. 1 is a block diagram showing a wireless communication system applicable to an embodiment of this application. The wireless communication system includes a terminal 11 and a network-side device 12. The terminal 11 may be a mobile phone, a tablet personal computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal Computer, UMPC), a mobile Internet device (Mobile Internet Device, MID), an augmented reality (Augmented Reality, AR) or virtual reality (Virtual Reality, VR) device, a robot, a wearable device (Wearable Device), a flight vehicle (flight vehicle), vehicle user equipment (Vehicle User Equipment, VUE), a ship-borne device, pedestrian user equipment (Pedestrian User Equipment, PUE), a smart home appliance (a home device having a wireless communication function, such as a refrigerator, a television, a washing machine, or furniture), and a terminal-side device such as a game machine, a personal computer (Personal Computer, PC), a teller machine, or a self-service machine. The wearable device includes a smart watch, a smart band, a smart earphone, smart glasses, smart jewelry (a smart bracelet, a smart chain, a smart ring, a smart necklace, a smart anklet, a smart ankle chain, or the like), a smart wristband, smart clothing, or the like. The vehicle user equipment may also be referred to as a vehicle terminal, a vehicle controller, a vehicle module, a vehicle component, a vehicle chip, a vehicle unit, or the like. It should be noted that, a specific type of the terminal 11 is not limited in embodiments of this application. The network-side device 12 may include an access network device or a core network device, where the access network device may also be referred to as a radio access network (Radio Access Network, RAN) device, a radio access network function, or a radio access network unit. The access network device may include a base station, a wireless local area network (Wireless Local Area Network, WLAN) access point (Access Point, AS), a Wireless Fidelity (Wireless Fidelity, WiFi) node, or the like. The base station may be referred to as a NodeB (Node B, NB), an evolved NodeB (Evolved Node B, eNB), a next generation NodeB (the next generation Node B, gNB), a new radio NodeB (New Radio Node B, NR Node B), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home NodeB (home Node B, HNB), a home evolved NodeB (home evolved Node B), a transmission reception point (Transmission Reception Point, TRP), or another appropriate term in the field. Provided that the same technical effect is achieved, the base station is not limited to specific technical terms. It should be noted that, in embodiments of this application, a base station in an NR system is merely used as an example, and a specific type of the base station is not limited.

To better understand the technical solutions in this application, related concepts that may be included in embodiments of this application are described below.

At present, artificial intelligence is widely applied in various fields. AI modules may be implemented in multiple manners, for example, a neural network, a decision tree, a support vector machine, and a Bayes classifier. In this application, the neural network is used as an example for description, but a specific type of the AI module is not limited.

Parameters of a neural network are optimized through an optimization algorithm. The optimization algorithm is an algorithm that minimizes or maximizes an objective function (sometimes referred to as a loss function). The objective function is usually a mathematical combination of model parameters and data. For example, assuming that data X and a label Y corresponding to the data are given, one neural network model f (.) is constructed. With the model, a predicted output f (x) can be obtained based on an input x, and a difference (f(x)-Y) between a predicted value and a real value can be calculated. The objective is to find an appropriate weight (multiplicative coefficient) and bias (additive coefficient), to minimize a value of the above loss function. A smaller loss value indicates that the model is closer to a ground truth.

Currently, common optimization algorithms are basically based on an error back propagation (error Back Propagation, BP) algorithm. A basic idea of the BP algorithm is that a learning process includes two processes: signal forward propagation and error back propagation. During forward propagation, an input sample is transferred from an input layer to an output layer after being processed by each hidden layer. If an actual output of the output layer does not match a desired output, the process proceeds to an error back propagation phase. Error back propagation is to transmit an output error layer by layer to the input layer through a hidden layer in some form for back propagation, and allocate the error to all units of each layer, to obtain an error signal of a unit at each layer. This error signal is used as a basis for correcting a weight value of each unit. A weight value adjustment process of each layer during signal forward propagation and error back propagation is carried out repeatedly. A process of continuously adjusting a weight value is a learning and training process of a network. The process proceeds until the error in the network output is reduced to an acceptable level, or until a preset quantity of learning iterations is reached.

Generally, according to different types of solutions, selected AI algorithms and used models also vary. Currently, a primary approach for improving performance of a 5G network through AI is to enhance or replace an existing algorithm or processing module with a neural network-based algorithm and AI model. In a specific scenario, a neural network-based algorithm and AI model can achieve better performance than a deterministic algorithm. Commonly used neural networks include a deep neural network, a convolutional neural network, a recurrent neural network, and the like. With the help of existing AI tools, neural networks can be built, trained, and verified.

Replacing modules in an existing system with an AI/machine learning (Machine Learning, ML) approach can effectively improve system performance. For example, for channel state information (Channel State Information, CSI) prediction, historical CSI is input to the AI model, and the AI model analyzes a time-domain variation characteristic of a channel and outputs future CSI. By monitoring and analyzing system performance, CSI prediction yields a significant performance gain compared to a scheme without prediction. In addition, for different future moments predicted, prediction accuracy that can be achieved varies.

Although AI-based CSI prediction yields a gain, the AI-based CSI prediction is also subject to disadvantages. The most important one is poor generalization of an AI-based scheme. When an inference environment differs significantly from a training environment, the performance of the AI model degrades substantially, resulting in a mismatch. For example, a CSI prediction AI model trained by using a channel of a terminal moving at 30 km/h has poor performance in a scenario in which a terminal moves at 60 km/h. Therefore, actual inference performance of CSI prediction needs to be monitored, and a series of adjustment measures need to be triggered based on a monitoring result.

The model monitoring may be implemented based on multiple metrics, for example, monitoring based on features or distribution of input and output data, monitoring based on an intermediate result (error metrics or accuracy metrics) output by the model, monitoring based on a final performance result, and monitoring based on a result of comparison with another scheme.

Monitoring based on distribution of model inputs or outputs: Statistics on input information or output information of a model being executed (a model performing inference or a model that is activated) are collected, and distribution information (such as a mean value, a mean vector, a mean matrix, a variance, a variance vector, a variance matrix, a covariance, a covariance vector, a covariance matrix, a maximum value, a maximum value vector, a maximum value matrix, a minimum value, a minimum value vector, or a minimum value matrix) of the input information or the output information of the model is calculated. When the model is obtained through training, there may also be an input or output distribution information range applicable to the model. The terminal compares the calculated distribution information with the distribution information range applicable to the model, to obtain a monitoring result. Alternatively, the terminal reports the calculated distribution information to the network side, and the network side compares the received distribution information with the distribution information range applicable to the model, to obtain a monitoring result.

Monitoring based on an intermediate result (error metrics or accuracy metrics) calculated based on an output of a model: Output information of the model is compared with ground truth information corresponding to the output information, and an intermediate result, such as an error or accuracy, output by the model is calculated. The terminal compares the intermediate result with a preset threshold, to obtain a monitoring result. Alternatively, the terminal reports the calculated intermediate result to the network side, and the network side compares the received intermediate result with a preset threshold, to obtain the monitoring result.

Monitoring based on a final performance result: The terminal or the network side collects statistics on or calculates current communication system performance, such as throughput, spectrum efficiency, a signal-to-noise and interference ratio (signal-to-noise and interference ratio, SINR), a signal-to-noise ratio (signal-to-noise ratio, SNR), a bit error rate, a block error rate, a packet loss rate, a transmission rate (uplink/downlink), and a peak rate (uplink/downlink). The terminal or the network side compares the current communication system performance with a preset threshold, to obtain a monitoring result. If statistics collection on or calculation of the current communication system performance is performed by the terminal, the communication system performance may also be reported to the network side.

Monitoring based on a comparison result with another scheme: The terminal compares an intermediate result or a final performance result obtained based on the model with an intermediate result or a final performance result obtained in another scheme, to obtain a monitoring result. Alternatively, the terminal reports, to the network side, the intermediate result or the final performance result obtained based on the model and the intermediate result or the final performance result obtained in another scheme, and the network side compares the intermediate result or the final performance result obtained based on the model and the intermediate result or the final performance result obtained in another scheme, to obtain a monitoring result.

Currently, in a communication system, monitoring of an AI unit usually relies primarily on monitoring metrics or monitoring data reported by a terminal. A network side adjusts the AI unit based on monitoring metrics or monitoring data reported by multiple terminals. However, an AI unit adjusted by the network side in such a manner is not applicable to all terminals, resulting in poor applicability of an AI unit adjustment manner.

It should be noted that, the AI unit described in this application may also be referred to as an AI model, an AI structure, or the like, or the AI unit may also be a processing unit that can implement a particular algorithm, formula, processing procedure, capability, or the like related to AI, or the AI unit may be a processing method, algorithm, function, module, or unit for a particular data set, or the AI unit may be a processing method, an algorithm, a function, a module, or a unit that runs on AI-related hardware such as a GPU, an NPU, a TPU, or an ASIC. This is not specifically limited in this application. Optionally, the particular data set includes an input and/or an output of the AI unit.

Optionally, an identifier of the AI unit may be an AI model identifier, an AI structure identifier, an AI algorithm identifier, a functionality identifier (functionality ID), a physical identifier, a logical identifier, a global identifier, a local identifier or an identifier of a particular data set associated with the AI unit, an identifier of a particular scene, environment, channel feature, or device related to the AI, or an identifier of a function, feature, capability, or module related to the AI. This is not specifically limited in this application.

The transmission method and apparatus, the communication device, and the like provided in embodiments of this application are described in detail below by using some embodiments and application scenarios thereof with reference to the accompanying drawings.

Referring to FIG. 2, FIG. 2 is a flowchart of a transmission method according to an embodiment of this application. As shown in FIG. 2, the method includes the following steps.

Step 201: A terminal sends first information to a network-side device, where the first information indicates an adjustment recommendation of the terminal for a first AI unit.

The first AI unit may refer to a particular AI unit. Optionally, the terminal may determine the first AI unit based on an identifier of the AI unit, so that the network-side device learns which AI unit the first information is for.

For example, the first AI unit is an AI unit run (or referred to as used) by the terminal, so that the terminal may determine, based on a running status of the first AI unit, an adjustment recommendation according for adjustment of the first AI unit, for example, a model parameter of the first AI unit that needs to be adjusted or a monitoring configuration of the first AI unit, or may further include a recommendation on whether the first AI unit needs to be adjusted, for example, keeping the first AI unit running with a current configuration, or switching the first AI unit. The terminal generates the first information based on these adjustment recommendations, and sends the first information to the network-side device, that is, sends the adjustment recommendation of the terminal for the first AI unit to the network-side device, helping the network-side device make, based on the adjustment recommendation, a decision about whether to adjust and how to adjust the first AI unit.

In this embodiment of this application, the terminal sends the first information to the network-side device. The first information indicates the adjustment recommendation of the terminal for the first AI unit, so that the terminal can obtain the adjustment recommendation based on a status of running the first AI unit by the terminal, helping the network-side device make, based on the adjustment recommendation, a decision about whether to adjust and how to adjust the first AI unit. In this way, adjustment of the first AI unit is made by the network-side device based on the adjustment recommendation reported by the terminal, so that the adjustment of the first AI unit is more aligned with the running scenario of the terminal, and the adjusted first AI unit better suits running at the terminal, helping improve inference performance of the first AI unit.

Optionally, before step 201, the method further includes:
receiving, by the terminal, configuration information sent by the network-side device, where the configuration information indicates the terminal to report an adjustment recommendation for the first AI unit.

In this embodiment of this application, before the terminal sends the first information to the network-side device, the network-side device sends the configuration information to the terminal. The configuration information indicates the terminal to report an adjustment recommendation for the first AI unit. That is, the network-side device may inform, by using the configuration information, the terminal of adjustment recommendations that may be reported, so that the terminal can determine, based on the configuration information, the adjustment recommendations to be collected, helping with better generation of the first information.

Optionally, the first information or the configuration information includes at least one of the following adjustment recommendations:
keeping the first AI unit running with a current configuration, that is, the first AI unit may not be adjusted;
switching to a second AI unit, where the second AI unit refers to another AI unit different from the first AI unit, and the first information or the configuration information may include an identifier of the second AI unit to which the switching is made;
falling back to a non-AI mode, for example, stopping running the first AI unit;
disabling a function corresponding to the first AI unit, for example, disabling a CSI prediction function if the first AI unit is an AI unit that implements CSI prediction; and for another example, disabling a CSI prediction function in a specific scenario if the first AI unit is an AI unit that implements CSI prediction in the specific scenario (for example, in a specific speed range), without adjusting a CSI prediction function in another scenario;
adjusting a parameter of the first AI unit;
requesting a new AI unit;
deregistering the first AI unit;
adjusting a monitoring configuration of the first AI unit, where the monitoring configuration includes monitoring window related information (monitoring duration, a quantity of monitoring samples, and the like), information about triggering conditions for monitoring, information about reporting conditions for monitoring results, and the like;
requesting training of the first AI unit;
requesting data collection for training the first AI unit;
requesting parallelism of multiple AI units or monitoring of multiple AI units, where the multiple AI units may include the first AI unit; and
adjusting auxiliary information in an input of the first AI unit, where the auxiliary information is a part of input information of the first AI unit and may be of multiple types, for example, auxiliary information of a first AI unit that implements CSI prediction may be speed information, location information, sensing information, doppler information, cell identity information, and the like.

In this embodiment of this application, the first information sent by the terminal to the network-side device includes at least one of the foregoing adjustment recommendations, and the network-side device obtains these adjustment recommendations based on the first information reported by the terminal, helping the network-side device make, based on the adjustment recommendation, a decision about whether to adjust and how to adjust the first AI unit. In addition, the configuration information sent by the network-side device to the terminal may also include at least one of the foregoing adjustment recommendations, so that the terminal can determine, based on the configuration information, which adjustment recommendations need to be reported, enabling more targeted reporting behavior of the terminal.

Optionally, the first information or the configuration information further includes at least one of the following:
a reporting condition for each adjustment recommendation in the first information or the configuration information, for example, determining to report an adjustment recommendation if the adjustment recommendation or a related metric satisfies a preset threshold condition;
a reporting priority of each adjustment recommendation in the first information or the configuration information, that is, which adjustment recommendations may be preferentially reported;
a reporting order of each adjustment recommendation in the first information or the configuration information, that is, an order in which each adjustment recommendation is reported, for example, which adjustment recommendations are reported first and which adjustment recommendations are reported later; and
a dependency relationship between adjustment recommendations in the first information or the configuration information, for example, adjustment recommendations need to be reported together, for example, adjustment recommendations of deregistering the first AI unit and falling back to a non-AI mode need to be reported together, for another example, requesting training of the first AI unit and requesting data collection for training the first AI unit need to be reported together, and the like.

In this embodiment of this application, the reporting condition, the reporting priority, the reporting order, or the dependency relationship of each adjustment recommendation in the first information or the configuration information is limited, enabling more ordered reporting of the adjustment recommendation.

Optionally, before the terminal sends the first information to the network-side device, the method further includes:
receiving, by the terminal, second information sent by the network-side device, where the second information indicates a type of monitoring performed by the terminal on the first AI unit, and the type of monitoring includes at least one of the following:
monitoring based on a monitoring metric;
monitoring based on raw data, where the raw data is data for calculating a monitoring metric; and
monitoring based on a terminal recommendation.

It should be noted that the monitoring based on a monitoring metric refers to monitoring based on features or distribution of input and/or output data of an AI unit, monitoring based on an intermediate result output by an AI unit, monitoring based on a final performance result of an AI unit, and the like. Monitoring metrics obtained in such schemes include accuracy metrics, error metrics, distribution metrics, scoring metrics, and the like, and the metrics may be one value or a group of values.

The monitoring based on raw data refers to reporting by the terminal of raw data of monitoring metrics obtained in schemes such as monitoring based on features or distribution of input and/or output data of an AI unit, monitoring based on an intermediate result output by an AI unit, monitoring based on a final performance result of an AI unit, and the like, for example, an output of the first AI unit or a ground truth corresponding to an output of the first AI unit.

The monitoring based on a terminal recommendation refers to the monitoring based on an adjustment recommendation for the first AI unit reported by the terminal to the network-side device.

In this embodiment of this application, the network-side device sends the second information to the terminal, so that the terminal can determine, based on the second information, which monitoring type is to be used for the first AI unit, helping the terminal monitor inference performance of the first AI unit, and helping the terminal collect related data when running the first AI unit, to obtain monitoring data or an adjustment recommendation that needs to be reported.

Optionally, that the terminal sends the first information to the network-side device includes:
generating, by the terminal, the first information based on at least one of the second information, the configuration information, and inference performance of the first AI unit; and
sending, by the terminal, the first information to the network-side device.

For example, when the terminal receives the second information and the configuration information sent by the network-side device, the terminal may generate the first information based on at least one of the second information, the configuration information, and the inference performance of the first AI unit. For example, the terminal generates the first information based on the configuration information and the inference performance of the first AI unit, that is, generates an adjustment recommendation of the terminal for the first AI unit. Alternatively, when the second information includes a recommendation based on the terminal, the terminal generates the first information based on the second information, the configuration information, and the inference performance of the first AI unit, that is, generates an adjustment recommendation of the terminal for the first AI unit. The inference performance of the first AI unit may include an inference performance monitoring metric obtained by the terminal based on running of the first AI unit.

In this embodiment of this application, the terminal can generate the first information based on at least one of the second information, the configuration information, and the inference performance of the first AI unit, that is, generate an adjustment recommendation of the terminal for the first AI unit, specifying a manner of generating the adjustment recommendation.

Optionally, sending of the second information and the configuration information satisfies any one of the following:
the second information and the configuration information are carried and sent in same information, where for example, the second information and the configuration information may be two pieces of content or two pieces of sub-information in one piece of information, so that the second information and the configuration information are sent together, helping save transmission resources;
the second information and the configuration information are carried and sent in same signaling, where for example, the second information and the configuration information are two independent pieces of information, but may be carried and sent in same signaling, helping save transmission resources; and
the second information and the configuration information are respectively carried and sent in different signaling, that is, the second information and the configuration information are used as two separate pieces of information, and are respectively carried and sent in different signaling.

Optionally, before the terminal receives the second information sent by the network-side device, the method further includes at least one of the following:
the terminal sends first capability information to the network-side device, where the first capability information indicates an AI unit monitoring type supported by the terminal;
the terminal sends second capability information to the network-side device, where the second capability information indicates whether the terminal supports the monitoring based on a terminal recommendation; and
the terminal sends third capability information to the network-side device, where the third capability information indicates the adjustment recommendation the terminal can make.

For example, the terminal sends the first capability information to the network-side device, and indicates, by using the first capability information, an AI unit monitoring type supported by the terminal, that is, indicates which monitoring type or monitoring types the terminal supports among the monitoring based on a monitoring metric, the monitoring based on raw data, and the monitoring based on a terminal recommendation, so that the network-side device can specify the AI unit monitoring type supported by the terminal, helping the network-side device determine a subsequent behavior, for example, whether to send the configuration information to the terminal.

For another example, the terminal may send the second capability information to the network-side device, and indicates, by using the second capability information, whether the terminal supports the monitoring based on a terminal recommendation, so that the network-side device can specify whether the terminal supports the monitoring based on the terminal recommendation, and can specify whether the terminal can report an adjustment recommendation for the first AI unit, helping the network-side device determine whether to send the configuration information to the terminal.

For another example, the terminal may further send the third capability information to the network-side device, and indicates, by using the third capability information, the adjustment recommendation the terminal can make, so that the network-side device can learn which adjustment recommendations for the first AI unit can be obtained from the terminal, helping the network-side device make an adjustment decision for the first AI unit.

Optionally, the first capability information, the second capability information, and the third capability information are sent separately or carried and sent in same signaling or information.

In this embodiment of this application, after the terminal sends the first information to the network-side device, the method further includes:
receiving, by the terminal, third information sent by the network-side device, where the third information includes an adjustment decision for the first AI unit.

It could be understood that after the terminal reports the adjustment recommendation for the first AI unit to the network device, the network-side device can make, based on the adjustment recommendation, an adjustment decision about whether to adjust and how to adjust the first AI unit, and send the third information to the terminal, where the third information includes the adjustment decision for the first AI unit. Therefore, the terminal may adjust the first AI unit based on the adjustment decision, so that the adjusted first AI unit better suits running at the terminal, helping improve inference performance of the first AI unit.

Referring to FIG. 3, FIG. 3 is a flowchart of another transmission method according to an embodiment of this application. As shown in FIG. 3, the method includes the following steps.

Step 301: A network-side device receives first information sent by a terminal, where the first information indicates an adjustment recommendation of the terminal for a first AI unit.

Optionally, before the network-side device receives the first information sent by the terminal, the method further includes:
sending, by the network-side device, configuration information to the terminal, where the configuration information indicates the terminal to report an adjustment recommendation for the first AI unit.

Optionally, the first information or the configuration information includes at least one of the following adjustment recommendations:
keeping the first AI unit running with a current configuration;
switching to a second AI unit;
falling back to a non-AI mode;
disabling a function corresponding to the first AI unit;
adjusting a parameter of the first AI unit;
requesting a new AI unit;
deregistering the first AI unit;
adjusting a monitoring configuration of the first AI unit;
requesting training of the first AI unit;
requesting data collection for training the first AI unit;
requesting parallelism of multiple AI units or monitoring of multiple AI units; and
adjusting auxiliary information in an input of the first AI unit.

Optionally, the first information or the configuration information further includes at least one of the following:
a reporting condition for each adjustment recommendation in the first information or the configuration information;
a reporting priority of each adjustment recommendation in the first information or the configuration information;
a reporting order of each adjustment recommendation in the first information or the configuration information; and
a dependency relationship between adjustment recommendations in the first information or the configuration information.

Optionally, before the network-side device receives the first information sent by the terminal, the method further includes:
sending, by the network-side device, second information to the terminal, where the second information indicates a type of monitoring performed by the terminal on the first AI unit, and the type of monitoring includes at least one of the following:
monitoring based on a monitoring metric;
monitoring based on raw data, where the raw data is data for calculating a monitoring metric; and
monitoring based on a terminal recommendation.

Optionally, sending of the second information and the configuration information satisfies any one of the following:
the second information and the configuration information are carried and sent in same information;
the second information and the configuration information are carried and sent in same signaling; and
the second information and the configuration information are carried and sent in different signaling.

Optionally, before the network-side device sends the second information to the terminal, the method further includes at least one of the following:
the network-side device receives first capability information sent by the terminal, where the first capability information indicates an AI unit monitoring type supported by the terminal;
the network-side device receives second capability information sent by the terminal, where the second capability information indicates whether the terminal supports the monitoring based on a terminal recommendation; and
the network-side device receives third capability information sent by the terminal, where the third capability information indicates the adjustment recommendation the terminal can make.

Optionally, the first capability information, the second capability information, and the third capability information are sent separately or carried and sent in same signaling or information.

Optionally, after the network-side device receives the first information sent by the terminal, the method further includes:
generating, by the network-side device, third information based on the first information, and sending the third information to the terminal, where the third information includes an adjustment decision for the first AI unit.

For example, the network-side device may receive the first information reported by multiple terminals, and take into account adjustment recommendations in the first information reported by the multiple terminals to generate the third information, that is, generate the adjustment decision for the first AI unit. In this way, the network-side device can take into account the adjustment recommendations in the first information reported by the multiple terminals to generate the adjustment decision for the first AI unit, so that the adjustment decision generated by the network-side device integrates the adjustment recommendations reported by the multiple terminals, enabling a more comprehensive adjustment decision for the first AI unit, helping improve performance of the first AI unit, and enabling applicability of the adjustment decision to different terminals.

It should be noted that the transmission method applied to the network-side device as provided in this embodiment of this application corresponds to the foregoing transmission method applied to the terminal side. For specific implementations and related concepts in this embodiment of this application, refer to the descriptions in the foregoing method embodiments on the terminal side. Details are not described herein again.

In this embodiment of this application, the network-side device receives the first information sent by the terminal. The first information indicates the adjustment recommendation of the terminal for the first AI unit, so that the terminal can obtain the adjustment recommendation based on a status of running the first AI unit by the terminal, helping the network-side device make, based on the adjustment recommendation, a decision about whether to adjust and how to adjust the first AI unit. In this way, adjustment of the first AI unit is made by the network-side device based on the adjustment recommendation reported by the terminal, and the adjustment of the first AI unit is more aligned with the running scenario of the terminal, effectively improving applicability of AI unit adjustment.

Referring to FIG. 4, FIG. 4 is a flowchart of another transmission method according to an embodiment of this application. As shown in FIG. 4, the method includes the following steps.

Step 401: A terminal sends first capability information, second capability information, and third capability information to a network-side device.

Step 402: The network-side device sends configuration information and second information to the terminal.

Step 403: The terminal generates first information based on the configuration information and the second information, where the first information includes an adjustment recommendation of the terminal for a first AI unit.

Step 404: The terminal sends the first information to the network-side device.

Step 405: The network-side device generates an adjustment decision for the first AI unit based on the first information, and sends third information to the terminal, where the third information includes the adjustment decision.

For specific implementations and related concepts in this embodiment of this application, refer to the descriptions in the foregoing method embodiments. Details are not described herein again.

The transmission methods provided in embodiments of this application may be performed by a transmission apparatus. In this embodiment of this application, the transmission apparatus provided in embodiments of this application is described by using an example in which the transmission method is performed by the transmission apparatus.

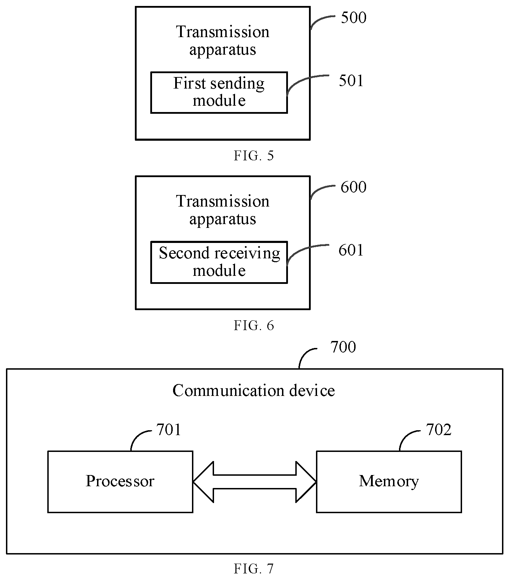

Referring to FIG. 5, FIG. 5 is a structural diagram of a transmission apparatus according to an embodiment of this application. As shown in FIG. 5, the transmission apparatus 500 includes:
a first sending module 501, configured to send first information to a network-side device, where the first information indicates an adjustment recommendation of the apparatus for a first AI unit.

Optionally, the apparatus further includes:
a first receiving module, configured to receive configuration information sent by the network-side device, where the configuration information indicates the apparatus to report an adjustment recommendation for the first AI unit.

Optionally, the first information or the configuration information includes at least one of the following adjustment recommendations:
keeping the first AI unit running with a current configuration;
switching to a second AI unit;
falling back to a non-AI mode;
disabling a function corresponding to the first AI unit;
adjusting a parameter of the first AI unit;
requesting a new AI unit;
deregistering the first AI unit;
adjusting a monitoring configuration of the first AI unit;
requesting training of the first AI unit;
requesting data collection for training the first AI unit;
requesting parallelism of multiple AI units or monitoring of multiple AI units; and
adjusting auxiliary information in an input of the first AI unit.

Optionally, the first information or the configuration information further includes at least one of the following:
a reporting condition for each adjustment recommendation in the first information or the configuration information;
a reporting priority of each adjustment recommendation in the first information or the configuration information;
a reporting order of each adjustment recommendation in the first information or the configuration information; and
a dependency relationship between adjustment recommendations in the first information or the configuration information.

Optionally, the first receiving module is further configured to:
receive second information sent by the network-side device, where the second information indicates a type of monitoring performed by the apparatus on the first AI unit, and the type of monitoring includes at least one of the following:
monitoring based on a monitoring metric;
monitoring based on raw data, where the raw data is data for calculating a monitoring metric; and
monitoring based on a terminal recommendation.

Optionally, the first sending module 501 is further configured to:
generate the first information based on at least one of the second information, the configuration information, and inference performance of the first AI unit; and
send the first information to the network-side device.

Optionally, sending of the second information and the configuration information satisfies any one of the following:
the second information and the configuration information are carried and sent in same information;
the second information and the configuration information are carried and sent in same signaling; and
the second information and the configuration information are carried and sent in different signaling.

Optionally, the first sending module 501 is further configured to perform any one of the following:
sending first capability information to the network-side device, where the first capability information indicates an AI unit monitoring type supported by the terminal;
sending second capability information to the network-side device, where the second capability information indicates whether the terminal supports the monitoring based on a terminal recommendation; and
send third capability information to the network-side device, where the third capability information indicates the adjustment recommendation the terminal can make.

Optionally, the first capability information, the second capability information, and the third capability information are sent separately or carried and sent in same signaling or information.

Optionally, the apparatus further includes:
a third receiving module, configured to receive third information sent by the network-side device, where the third information includes an adjustment decision for the first AI unit.

In this embodiment of this application, the apparatus (for example, the terminal) can send the first information to the network-side device. The first information indicates the adjustment recommendation of the apparatus for the first AI unit, so that the apparatus can obtain the adjustment recommendation based on a status of running the first AI unit by the apparatus, helping the network-side device make, based on the adjustment recommendation, a decision about whether to adjust and how to adjust the first AI unit. In this way, adjustment of the first AI unit is made by the network-side device based on the adjustment recommendation reported by the terminal, and the adjustment of the first AI unit is more aligned with the running scenario of the terminal, effectively improving applicability of AI unit adjustment.

The transmission apparatus in this embodiment of this application may be an electronic device, such as an electronic device having an operating system, or may be a component in an electronic device, such as an integrated circuit or a chip. The electronic device may be a terminal or may be another device other than the terminal. For example, the terminal may include, but is not limited to, types of the terminal 11 listed above. The another device may be a server, a network attached storage (Network Attached Storage, NAS), or the like. This is not specifically limited in embodiments of this application.

The transmission apparatus provided in this embodiment of this application can implement the processes implemented by the method embodiment in FIG. 2, and the same technical effects can be achieved. To avoid repetition, details are not described herein again.

Referring to FIG. 6, FIG. 6 is a structural diagram of another transmission apparatus according to an embodiment of this application. As shown in FIG. 6, the transmission apparatus 600 includes:
a second receiving module 601, configured to receive first information sent by a terminal, where the first information indicates an adjustment recommendation of the terminal for a first AI unit.

Optionally, the apparatus further includes:
a second sending module, configured to send configuration information to the terminal, where the configuration information indicates the terminal to report an adjustment recommendation for the first AI unit.

Optionally, the first information or the configuration information includes at least one of the following adjustment recommendations:
keeping the first AI unit running with a current configuration;
switching to a second AI unit;
falling back to a non-AI mode;
disabling a function corresponding to the first AI unit;
adjusting a parameter of the first AI unit;
requesting a new AI unit;
deregistering the first AI unit;
adjusting a monitoring configuration of the first AI unit;
requesting training of the first AI unit;
requesting data collection for training the first AI unit;
requesting parallelism of multiple AI units or monitoring of multiple AI units; and
adjusting auxiliary information in an input of the first AI unit.

Optionally, the first information or the configuration information further includes at least one of the following:
a reporting condition for each adjustment recommendation in the first information or the configuration information;
a reporting priority of each adjustment recommendation in the first information or the configuration information;
a reporting order of each adjustment recommendation in the first information or the configuration information; and
a dependency relationship between adjustment recommendations in the first information or the configuration information.

Optionally, the second sending module is further configured to:
send second information to the terminal, where the second information indicates a type of monitoring performed by the terminal on the first AI unit, and the type of monitoring includes at least one of the following:
monitoring based on a monitoring metric;
monitoring based on raw data, where the raw data is data for calculating a monitoring metric; and
monitoring based on a terminal recommendation.

Optionally, sending of the second information and the configuration information satisfies any one of the following:
the second information and the configuration information are carried and sent in same information;
the second information and the configuration information are carried and sent in same signaling; and
the second information and the configuration information are carried and sent in different signaling.

Optionally, the second receiving module 601 is further configured to perform at least one of the following:
receiving first capability information sent by the terminal, where the first capability information indicates an AI unit monitoring type supported by the terminal;
receiving second capability information sent by the terminal, where the second capability information indicates whether the terminal supports the monitoring based on a terminal recommendation; and
receiving third capability information sent by the terminal, where the third capability information indicates the adjustment recommendation the terminal can make.

Optionally, the first capability information, the second capability information, and the third capability information are sent separately or carried and sent in same signaling or information.

Optionally, the apparatus further includes:
a third sending module, configured to generate third information based on the first information, and send the third information to the terminal, where the third information includes an adjustment decision for the first AI unit.

In this embodiment of this application, the apparatus receives the first information sent by the terminal, so that the apparatus can make, based on the adjustment recommendation in the first information, a decision about whether to adjust and how to adjust the first AI unit. In this way, adjustment of the first AI unit is made by the apparatus based on the adjustment recommendation reported by the terminal, and the adjustment of the first AI unit is more aligned with the running scenario of the terminal, effectively improving applicability of AI unit adjustment.

The transmission apparatus provided in this embodiment of this application can implement the processes implemented by the method embodiment in FIG. 3, and the same technical effects can be achieved. To avoid repetition, details are not described herein again.

As shown in FIG. 7, an embodiment of this application further provides a communication device 700, including a processor 701 and a memory 702. The memory 702 stores a program or instructions that can be run on the processor 701. For example, when the communication device 700 is a terminal, the program or the instructions are executed by the processor 701 to implement the steps of the foregoing transmission method embodiments, and the same technical effects can be achieved. When the communication device 700 is a network-side device, the program or the instructions are executed by the processor 701 to implement the steps of the foregoing transmission method embodiments, and the same technical effects can be achieved. To avoid repetition, details are not described herein again.

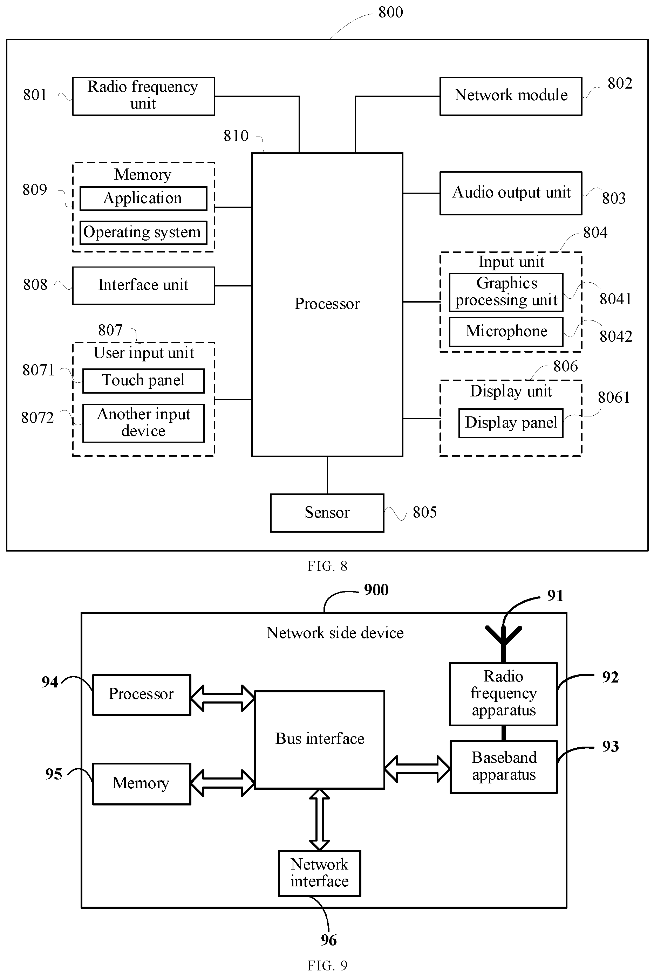

An embodiment of this application further provides a terminal, including a processor and a communication interface. The communication interface is coupled to the processor, and the processor is configured to run a program or instructions, to implement the steps of the method embodiment shown in FIG. 2. This terminal embodiment corresponds to the foregoing terminal-side method embodiment. Implementation processes and implementations of the foregoing method embodiment all may be applied to this terminal embodiment, and the same technical effects can be achieved. Specifically, FIG. 8 is a diagram of a hardware structure of a terminal according to an embodiment of this application.

The terminal 800 includes, but is not limited to, at least a part of components of a radio frequency unit 801, a network module 802, an audio output unit 803, an input unit 804, a sensor 805, a display unit 806, a user input unit 807, an interface unit 808, a memory 809, a processor 810, and the like.

A person skilled in the art may understand that the terminal 800 may further include a power supply (for example, a battery) that supplies power to the components. The power supply may be logically connected to the processor 810 through a power management system, implementing functions such as management of charging, discharging, and power consumption through the power management system. The structure of the terminal shown in FIG. 8 does not constitute any limitation on the terminal, and the terminal may include more or fewer components than shown in the diagram, or combine some of the components, or have different arrangements of the components. Details are not described herein.

It should be understood that, in this embodiment of this application, the input unit 804 may include a graphics processing unit (Graphics Processing Unit, GPU) 8041 and a microphone 8042. The graphics processing unit 8041 processes image data of a static picture or a video obtained by an image capture apparatus (for example, a camera) in a video capture mode or image capture mode. The display unit 806 may include a display panel 8061, and the display panel 8061 may be configured in a form of a liquid crystal display, an organic light-emitting diode, or the like. The user input unit 807 includes at least one of a touch panel 8071 and another input device 8072. The touch panel 8071 is also referred to as a touch screen. The touch panel 8071 may include two parts: a touch detection apparatus and a touch controller. The another input device 8072 may include but is not limited to a physical keyboard, a functional button (such as a volume control button or a switch button), a track ball, a mouse, or a joystick. Details are not described herein.

In this embodiment of this application, after receiving downlink data from a network-side device, the radio frequency unit 801 may transmit the data to the processor 810 for processing. In addition, the radio frequency unit 801 may send uplink data to the network-side device. Typically, the radio frequency unit 801 includes, but is not limited to, an antenna, an amplifier, a transceiver, a coupler, a low noise amplifier, a duplexer, and the like.

The memory 809 may be configured to store software programs or instructions and various data. The memory 809 may mainly include a first storage region for storing a program or instructions and a second storage region for storing data. The first storage region may store an operating system, an application program or instruction required by at least one function (for example, a sound playback function and an image playback function), or the like. In addition, the memory 809 may include a volatile memory or a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), and a direct rambus random access memory (Direct Rambus RAM, DR RAM). The memory 809 in embodiments of this application includes but is not limited to these memories and any other memory of a suitable type.

The processor 810 may include one or more processing units. Optionally, the processor 810 integrates an application processor and a modem processor. The application processor mainly processes operations involving an operating system, a user interface, an application program, and the like, and the modem processor mainly processes wireless communication signals, such as a baseband processor. It may be understood that the modem processor may alternatively not be integrated into the processor 810.

The radio frequency unit 801 is configured to send first information to a network-side device, where the first information indicates an adjustment recommendation of the terminal for a first AI unit.

In this embodiment of this application, the terminal sends the first information to the network-side device. The first information indicates the adjustment recommendation of the terminal for the first AI unit, so that the terminal can obtain the adjustment recommendation based on a status of running the first AI unit by the terminal, helping the network-side device make, based on the adjustment recommendation, a decision about whether to adjust and how to adjust the first AI unit. In this way, adjustment of the first AI unit is made by the network-side device based on the adjustment recommendation reported by the terminal, and the adjustment of the first AI unit is more aligned with the running scenario of the terminal, effectively improving applicability of AI unit adjustment.

It can be understood that for the implementation process of each implementation mentioned in this embodiment, reference can be made to the relevant descriptions of the above method embodiment on the terminal side, and the same or corresponding technical effects can be achieved. To avoid repetition, details are not described herein again.

An embodiment of this application further provides a network-side device, including a processor and a communication interface. The communication interface is coupled to the processor, and the processor is configured to run a program or instructions, to implement the steps in the method embodiment shown in FIG. 3. This embodiment of the network-side device corresponds to the above method embodiment on the network-side device, and each implementation process and implementation of the above method embodiment can be applied to this embodiment of the network-side device, and the same technical effects can be achieved.

Specifically, an embodiment of this application further provides a network-side device. As shown in FIG. 9, the network-side device 900 includes: an antenna 91, a radio frequency apparatus 92, a baseband apparatus 93, a processor 94, and a memory 95. The antenna 91 is connected to the radio frequency apparatus 92. In an uplink direction, the radio frequency apparatus 92 receives information via the antenna 91 and sends the received information to the baseband apparatus 93 for processing. In a downlink direction, the baseband apparatus 93 processes information to be sent, and sends the information to the radio frequency apparatus 92, and the radio frequency apparatus 92 processes the received information and then sends the information via the antenna 91.

The method executed by the network-side device in the foregoing embodiment can be implemented in the baseband apparatus 93. The baseband apparatus 93 includes a baseband processor.

The baseband apparatus 93 may include, for example, at least one baseband board, and multiple chips are disposed on the baseband board. As shown in FIG. 9, one of the chips is, for example, the baseband processor, which is connected to the memory 95 through a bus interface, to invoke a program in the memory 95 to perform a network device operation described in the foregoing method embodiment.

The network-side device may further include a network interface 96, and the interface, for example, is a common public radio interface (Common Public Radio Interface, CPRI).

Specifically, the network-side device 900 in this embodiment of this application further includes: instructions or a program stored in the memory 95 and runnable on the processor 94, and the processor 94 invokes the instructions or the program in the memory 95 to perform the method performed by the modules shown in FIG. 6, and achieves the same technical effects. To avoid repetition, details are not described herein again.

An embodiment of this application further provides a readable storage medium. The readable storage medium stores a program or instructions. When the program or the instructions are executed by a processor, the processes of the foregoing transmission method embodiments are implemented, and the same technical effects can be achieved. To avoid repetition, details are not described herein again.

The processor is a processor in the terminal in the above-mentioned embodiments. The readable storage medium includes a computer-readable storage medium, for example, a computer read-only memory ROM, a random access memory RAM, a floppy disk, or an optical disc. In some examples, the readable storage medium may be a non-transient readable storage medium,

An embodiment of this application further provides a chip, including a processor and a communication interface. The communication interface is coupled to the processor, and the processor is configured to run a program or instructions, to implement all processes of the foregoing transmission method embodiments, and the same technical effects can be achieved. To avoid repetition, details are not described herein again.

It should be understood that the chip in embodiments of this application may also be referred to as a system-level chip, a system chip, a chip system, a system on chip, or the like.

An embodiment of this application further provides a computer program/program product. The computer program/program product is stored in a storage medium and executed by at least one processor to implement all processes of the foregoing transmission method embodiments, and the same technical effects can be achieved. To avoid repetition, details are not described herein again.

An embodiment of this application further provides a system, including a terminal and a network-side device, where the terminal may be configured to perform the steps of the transmission method described above, and the network-side device may be configured to perform the steps of the transmission method described above.

It should be noted that the terms "include", "comprise", or any other variation thereof in this specification are intended to cover a non-exclusive inclusion, so that a process, a method, an article, or an apparatus that includes a list of elements includes those elements, and further includes other elements which are not expressly listed, or further includes elements inherent to this process, method, article, or apparatus. Without more constraints, an element preceded by a statement "includes a ..." does not preclude the presence of additional identical elements in the process, method, article, or apparatus that includes the element. In addition, it should be noted that the scope of the methods and apparatuses in embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described in combination with some examples may be combined in another example.

According to the descriptions of the foregoing implementations, a person skilled in the art may clearly understand that the method in the foregoing embodiments may be implemented by using a computer software product and a necessary universal hardware platform, or may certainly be implemented by using hardware. The computer software product is stored in a storage medium (for example, a ROM, a RAM, a magnetic disk, or an optical disc), and includes several instructions, to cause a terminal or a network-side device to perform the methods described in embodiments of this application.

The foregoing describes embodiments of this application with reference to the accompanying drawings. However, this application is not limited to the foregoing specific implementations. The foregoing specific implementations are merely examples, but are not limitative. Inspired by this application, a person of ordinary skill in the art may further make implementations in many forms without departing from the purposes of this application and the protection scope of the claims, and all the implementations shall fall within the protection of this application.

## Claims

1. A transmission method, comprising:
sending, by a terminal, first information to a network-side device, wherein the first information indicates an adjustment recommendation of the terminal for a first artificial intelligence AI unit.

2. The method according to claim 1, wherein before the sending, by a terminal, first information to a network-side device, the method further comprises:
receiving, by the terminal, configuration information sent by the network-side device, wherein the configuration information indicates the terminal to report an adjustment recommendation for the first AI unit.

3. The method according to claim 2, wherein the first information or the configuration information comprises at least one of the following adjustment recommendations:
keeping the first AI unit running with a current configuration;
switching to a second AI unit;
falling back to a non-AI mode;
disabling a function corresponding to the first AI unit;
adjusting a parameter of the first AI unit;
requesting a new AI unit;
deregistering the first AI unit;
adjusting a monitoring configuration of the first AI unit;
requesting training of the first AI unit;
requesting data collection for training the first AI unit;
requesting parallelism of multiple AI units or monitoring of multiple AI units; and
adjusting auxiliary information in an input of the first AI unit.

4. The method according to claim 3, wherein the first information or the configuration information further comprises at least one of the following:
a reporting condition for each adjustment recommendation in the first information or the configuration information;
a reporting priority of each adjustment recommendation in the first information or the configuration information;
a reporting order of each adjustment recommendation in the first information or the configuration information; and
a dependency relationship between adjustment recommendations in the first information or the configuration information.

5. The method according to claim 2, wherein before the sending, by a terminal, first information to a network-side device, the method further comprises:
receiving, by the terminal, second information sent by the network-side device, wherein the second information indicates a type of monitoring performed by the terminal on the first AI unit, and the type of monitoring comprises at least one of the following:
monitoring based on a monitoring metric;
monitoring based on raw data, wherein the raw data is data for calculating a monitoring metric; and
monitoring based on a terminal recommendation.

6. The method according to claim 5, wherein the sending, by a terminal, first information to a network-side device comprises:
generating, by the terminal, the first information based on at least one of the second information, the configuration information, and inference performance of the first AI unit; and
sending, by the terminal, the first information to the network-side device.

7. The method according to claim 5, wherein sending of the second information and the configuration information satisfies any one of the following:
the second information and the configuration information are carried and sent in same information;
the second information and the configuration information are carried and sent in same signaling; and
the second information and the configuration information are carried and sent in different signaling.

8. The method according to claim 5, wherein before the receiving, by the terminal, second information sent by the network-side device, the method further comprises at least one of the following:
sending, by the terminal, first capability information to the network-side device, wherein the first capability information indicates an AI unit monitoring type supported by the terminal;
sending, by the terminal, second capability information to the network-side device, wherein the second capability information indicates whether the terminal supports the monitoring based on a terminal recommendation; and
sending, by the terminal, third capability information to the network-side device, wherein the third capability information indicates the adjustment recommendation the terminal can make.

9. The method according to claim 8, wherein the first capability information, the second capability information, and the third capability information are sent separately or carried and sent in same signaling or information.

10. The method according to any one of claims 1 to 9, wherein after the sending, by a terminal, first information to a network-side device, the method further comprises:
receiving, by the terminal, third information sent by the network-side device, wherein the third information comprises an adjustment decision for the first AI unit.

11. A transmission method, comprising:
receiving, by a network-side device, first information sent by a terminal, wherein the first information indicates an adjustment recommendation of the terminal for a first AI unit.

12. The method according to claim 11, wherein before the receiving, by a network-side device, first information sent by a terminal, the method further comprises:
sending, by the network-side device, configuration information to the terminal, wherein the configuration information indicates the terminal to report an adjustment recommendation for the first AI unit.

13. The method according to claim 12, wherein the first information or the configuration information comprises at least one of the following adjustment recommendations:
keeping the first AI unit running with a current configuration;
switching to a second AI unit;
falling back to a non-AI mode;
disabling a function corresponding to the first AI unit;
adjusting a parameter of the first AI unit;
requesting a new AI unit;
deregistering the first AI unit;
adjusting a monitoring configuration of the first AI unit;
requesting training of the first AI unit;
requesting data collection for training the first AI unit;
requesting parallelism of multiple AI units or monitoring of multiple AI units; and
adjusting auxiliary information in an input of the first AI unit.

14. The method according to claim 13, wherein the first information or the configuration information further comprises at least one of the following:
a reporting condition for each adjustment recommendation in the first information or the configuration information;
a reporting priority of each adjustment recommendation in the first information or the configuration information;
a reporting order of each adjustment recommendation in the first information or the configuration information; and
a dependency relationship between adjustment recommendations in the first information or the configuration information.

15. The method according to claim 12, wherein before the receiving, by a network-side device, first information sent by a terminal, the method further comprises:
sending, by the network-side device, second information to the terminal, wherein the second information indicates a type of monitoring performed by the terminal on the first AI unit, and the type of monitoring comprises at least one of the following:
monitoring based on a monitoring metric;
monitoring based on raw data, wherein the raw data is data for calculating a monitoring metric; and
monitoring based on a terminal recommendation.

16. The method according to claim 15, wherein sending of the second information and the configuration information satisfies any one of the following:
the second information and the configuration information are carried and sent in same information;
the second information and the configuration information are carried and sent in same signaling; and
the second information and the configuration information are carried and sent in different signaling.

17. The method according to claim 15, wherein before the sending, by the network-side device, second information to the terminal, the method further comprises at least one of the following:
receiving, by the network-side device, first capability information sent by the terminal, wherein the first capability information indicates an AI unit monitoring type supported by the terminal;
receiving, by the network-side device, second capability information sent by the terminal, wherein the second capability information indicates whether the terminal supports the monitoring based on a terminal recommendation; and
receiving, by the network-side device, third capability information sent by the terminal, wherein the third capability information indicates the adjustment recommendation the terminal can make.

18. The method according to claim 17, wherein the first capability information, the second capability information, and the third capability information are sent separately or carried and sent in same signaling or information.

19. The method according to any one of claims 11 to 18, wherein after the receiving, by a network-side device, first information sent by a terminal, the method further comprises:
generating, by the network-side device, third information based on the first information, and sending the third information to the terminal, wherein the third information comprises an adjustment decision for the first AI unit.

20. A transmission apparatus, wherein the apparatus comprises:
a first sending module, configured to send first information to a network-side device, wherein the first information indicates an adjustment recommendation of the apparatus for a first AI unit.

21. The apparatus according to claim 20, wherein the apparatus further comprises:
a first receiving module, configured to receive configuration information sent by the network-side device, wherein the configuration information indicates the apparatus to report an adjustment recommendation for the first AI unit.

22. The apparatus according to claim 21, wherein the first information or the configuration information comprises at least one of the following adjustment recommendations:
keeping the first AI unit running with a current configuration;
switching to a second AI unit;
falling back to a non-AI mode;
disabling a function corresponding to the first AI unit;
adjusting a parameter of the first AI unit;
requesting a new AI unit;
deregistering the first AI unit;
adjusting a monitoring configuration of the first AI unit;
requesting training of the first AI unit;
requesting data collection for training the first AI unit;
requesting parallelism of multiple AI units or monitoring of multiple AI units; and
adjusting auxiliary information in an input of the first AI unit.

23. The apparatus according to claim 21, wherein the first receiving module is further configured to:
receive second information sent by the network-side device, wherein the second information indicates a type of monitoring performed by the apparatus on the first AI unit, and the type of monitoring comprises at least one of the following:
monitoring based on a monitoring metric;
monitoring based on raw data, wherein the raw data is data for calculating a monitoring metric; and
monitoring based on a terminal recommendation.

24. The apparatus according to claim 23, wherein the first sending module is further configured to:
generate the first information based on at least one of the second information, the configuration information, and inference performance of the first AI unit; and
send the first information to the network-side device.

25. The apparatus according to claim 23, wherein the first sending module is further configured to perform any one of the following:
sending first capability information to the network-side device, wherein the first capability information indicates an AI unit monitoring type supported by the terminal;
sending second capability information to the network-side device, wherein the second capability information indicates whether the terminal supports the monitoring based on a terminal recommendation; and
sending third capability information to the network-side device, wherein the third capability information indicates the adjustment recommendation the terminal can make.

26. A transmission apparatus, wherein the apparatus comprises:
a second receiving module, configured to receive first information sent by a terminal, wherein the first information indicates an adjustment recommendation of the terminal for a first AI unit.

27. The apparatus according to claim 26, wherein the apparatus further comprises:
a second sending module, configured to send configuration information to the terminal, wherein the configuration information indicates the terminal to report an adjustment recommendation for the first AI unit.

28. The apparatus according to claim 27, wherein the first information or the configuration information comprises at least one of the following adjustment recommendations:
keeping the first AI unit running with a current configuration;
switching to a second AI unit;
falling back to a non-AI mode;
disabling a function corresponding to the first AI unit;
adjusting a parameter of the first AI unit;
requesting a new AI unit;
deregistering the first AI unit;
adjusting a monitoring configuration of the first AI unit;
requesting training of the first AI unit;
requesting data collection for training the first AI unit;
requesting parallelism of multiple AI units or monitoring of multiple AI units; and
adjusting auxiliary information in an input of the first AI unit.

29. The apparatus according to claim 27, wherein the second sending module is further configured to:
send second information to the terminal, wherein the second information indicates a type of monitoring performed by the terminal on the first AI unit, and the type of monitoring comprises at least one of the following:
monitoring based on a monitoring metric;
monitoring based on raw data, wherein the raw data is data for calculating a monitoring metric; and
monitoring based on a terminal recommendation.

30. The apparatus according to claim 29, wherein the second receiving module is further configured to perform at least one of the following:
receiving first capability information sent by the terminal, wherein the first capability information indicates an AI unit monitoring type supported by the terminal;
receiving second capability information sent by the terminal, wherein the second capability information indicates whether the terminal supports the monitoring based on a terminal recommendation; and
receiving third capability information sent by the terminal, wherein the third capability information indicates the adjustment recommendation the terminal can make.

31. The apparatus according to any one of claims 26 to 30, wherein the apparatus further comprises:
a third sending module, configured to generate third information based on the first information, and send the third information to the terminal, wherein the third information comprises an adjustment decision for the first AI unit.

32. A terminal, comprising a processor and a memory, wherein the memory stores a program or instructions that can be run on the processor, and when the program or the instructions are executed by the processor, steps of the transmission method according to any one of claims 1 to 10 are implemented.

33. A network-side device, comprising a processor and a memory, wherein the memory stores a program or instructions that can be run on the processor, and when the program or the instructions are executed by the processor, steps of the transmission method according to any one of claims 11 to 19 are implemented.

34. A readable storage medium, wherein the readable storage medium stores a program or instructions, and when the program or the instructions are executed by a processor, steps of the transmission method according to any one of claims 1 to 10 are implemented, or steps of the transmission method according to claim 11 or 19 are implemented.
